# EUROPEAN PATENT APPLICATION

(11) **EP 4 813 910 A1**
(43) Date of publication of application: **30.09.2026**
(21) Application number: 25227818.9
(22) Date of filing: 31.12.2025
(51) Int. Cl.: C01B 32/05, H01G 11/32, H01G 11/44, H01G 11/86

(54) **METHODS FOR OBTAINING POROUS ELECTRODE MATERIAL AND METHODS FOR OBTAINING A FELT WITH POROUS ELECTRODE MATERIAL**

(30) Priority: 28.03.2025 PL 45162825; 28.03.2025 PL 45162925; 28.03.2025 PL 45163025
(71) Applicant: Uniwersytet Mikolaja Kopernika w Toruniu, 87-100 Torun (PL)
(72) Inventor: Madajski, Piotr, 87-100 Torun (PL); Scigala, Aleksandra, 87-100 Torun (PL); Olejniczak, Andrzej, 87-100 Torun (PL); Binkowski, Pawel, 87-100 Torun (PL); Kurtulus, Sonnur, 87-100 Torun (PL); Wilska, Ewelina, 87-100 Torun (PL); Lukaszewicz, Jerzy Pawel, 87-100 Torun (PL); Kamedulski, Piotr, 87-800 Wloclawek (PL)

(57) **Abstract**

The subject of the invention are methods for obtaining a porous electrode material based on graphene flakes and methods for obtaining a felt with a porous electrode material based on graphene flakes with a controlled micro- and mesopore content, using gagate and its modification with graphene flakes.

## Description

The subject of the invention are methods for obtaining a porous electrode material based on graphene flakes and methods for obtaining a felt with a porous electrode material based on graphene flakes with a controlled micro- and mesopore content, using gagate and its modification with graphene flakes.

The invention uses, among others, gagate, a mineraloid and a bituminous variant of lignite. Gagate has been used for thousands of years, because of its properties and appearance, in jewellery and as a decorative material; therefore, it is environmentally harmless. In various cultures, gagate has been used as a protective amulet to ward off evil spirits and protect against misfortune, or in everyday objects, and in folk medicine to help with lung problems, headache and epilepsy [K. Pye, Electron microscope analysis of zoned dolomite rhombs in the Jet Rock Formation (Lower Toarcian) of the Whitby area, U.K., Geol. Mag. 1985, 122, (3), 279-286; M. Weller, et al., Jet: physical and material aspects, Journal of Alloys and Compounds 1994, 211-212, 385-389; M. Wagner, The geological aspects of meta-lignite and sub-bituminous coal occurrences in Poland within the context of deposits and uneconomic occurrences in Europe 2013, 29(4), 1-22. DOI 10.2478/gospo-2013-0046]. Other applications of gagate are particularly technical, although its physico-chemical properties and processing capabilities make it a potentially useful material for obtaining specialised materials, e.g. electrochemicals. Its importance is mainly due to the fact that it is a natural carbon material that can be modified and used in modern technologies. Gagate is a relatively cheap natural resource that can be optionally modified. The primary processing step may be the thermal treatment of the gagate, which should lead to the formation of a carbon skeleton. A review of the literature confirms that porous carbon from this material has not yet been produced by anyone, especially in combination with graphene flakes.

On the other hand, graphene flakes are fragments of graphene in the form of small, thin layers that are separated from larger graphite structures. They retain most of the essential properties of graphene. These allowed the creation of advanced hybrids with the gagate, of even better properties, providing new possibilities in energy storage and science.

Combining graphene flakes with gagate is not only possible, but can also lead to interesting, unique and promising applications in electrochemistry. Thanks to its porous structure, the resulting material can also be used in the future as an electrode material in supercapacitors, which require a large active surface area for charge storage [Z. Zhai, et al., A review of carbon materials for supercapacitors, Materials & Design 2022, 221, 111017; A.G. Pandolfo, et al., Carbon properties and their role in supercapacitors, Journal of Power Sources 2006, 157(1), 11-27; Y. Wang, et al., Recent progress in carbon-based materials for supercapacitors electrodes: a review, Journal of Materials Science 2021, 56, 173-200; C. Yuan, et al., Recent advances and challenges in biomass-derived carbon materials for supercapacitors: A review, Fuel 2024, 362, 130795; K. Wang, et al., Carbon fiber electrodes for composite structural supercapacitor: Preparation and modification methods, Journal of Energy Storage 2024, 98, part B, 113129].
Over the past decade, researchers have been looking for alternative, economic materials for many applications, especially for energy storage systems. Energy storage systems are gaining importance due to the energy transition, the increasing demand for electricity and the need to stabilise power grids. Furthermore, energy storage systems accelerate the transition toward clean energy, reducing the need for using coal and gas-fired power stations. With the increasing decarbonisation of the economy, energy storage systems are becoming a key component of modern energy systems, enabling a seamless transition toward sustainable and reliable energy [Z. Hou, et al., Towards a high efficiency and low-cost aqueous redox flow battery: A short review, Journal of Power Sources 2024, 601, 234242; M. Shoaib et al., Advances in Redox Flow Batteries - A Comprehensive Review on Inorganic and Organic Electrolytes and Engineering Perspectives, Advanced Energy Materials 2024, 14, 32, 2400721; L. Meng, et al., Rechargeable Zn-MnO2 Batteries: Progress, Challenges, Rational Design, and Perspectives, ChemElectroChem 2023, 11, 3, e202300495; X. Guo, et al., Zn/ MnO2 battery chemistry with dissolution-deposition mechanism, Materials Today Energy 2020, 16, 100396; N. Zhang, et al., Rechargeable aqueous zinc-manganese dioxide batteries with high energy and power densities, Nature Communications 2017, 8, 405; P. Kamedulski et al., High surface area micro-mesoporous graphene for electrochemical applications, Sci. Rep. 2021, 11, 22054; A. Ilnicka et al., Improving the Performance of Zn-Air Batteries with N-Doped Electroexfoliated Graphene, Materials 2020, 13(9), 2115].

Methods include the proposed carbon production steps, and all reagents used are intended to ensure the effective final use of gagate for obtaining a porous electrode material with controlled micro- and mesoporous content in the structure.

It is an object of the invention to develop methods for obtaining a porous electrode material based on graphene flakes and a gagate and methods for obtaining a felt with a porous electrode material based on graphene flakes, which will be applicable to conductive materials, in particular to electrode materials based on the carbon obtained. Ultimately, the combination of the excellent conductivity of graphene flakes with the porous structure of gagate leads to a material with improved electrochemical properties. Currently, the development of economic, efficient and stable energy storage devices based on large surface area carbons is very important. Due to the increasing costs of materials, it is necessary to synthesise new materials that can be used as an electrode material to solve problems such as electrochemical instability. The first possible application is the use of porous carbon materials from gagate and graphene as porous electrodes in flow batteries, particularly in manganese cathodes that enable the following reaction:

Mn²⁺ + 2 H₂O → MnO₂ + 2e- +4H⁺

The development of flow batteries based on zinc (Zn) and manganese dioxide (_{MnO₂}) aims to address critical challenges in the field of energy storage.

The invention aims to solve the problem of complex, time-consuming and expensive obtaining of an electrode material for energy storage systems - flow batteries. In such batteries, a carbon felt is used, which usually lacks sufficient porosity and electrical conductivity, reducing the performance in terms of energy storage efficiency. One of the purposes of using new electrode materials based on gagate and graphene is also the elimination of the disadvantages of carbon felt by modification with gagate and graphene flakes.

The subject of the invention is a method for obtaining a porous electrode material based on graphene flakes, which consists in adding ZnCl₂ to the ground gagate at a ratio of 1:6 to 1:12, preferably 1:8, and mixing while triturating for 5 min to 15 min; after which the mixture is placed in a porcelain boat and carbonised in a tube furnace under an inert gas atmosphere of argon or nitrogen and heated at a heating rate of 5 to 30°C/min, preferably 5°C/ min or 10°C/min, or 20°C/min, to a temperature of 800°C; then this temperature and the inert gas flow are maintained for 1 h to 5 h, preferably 3 hours; followed by self-cooling under oxygen-free atmosphere to a temperature below 40°C, the sample obtained in this way is then ground, placed in a beaker with distilled water at a ratio of 1:1 dm³ to 1:3 dm³, preferably 1:2 dm³, and mixed in a magnetic stirrer for 10 min to 60 min, preferably 30 min; then the sample is drained, washed at least once with distilled water with a temperature of 70°C to 95°C, preferably 90°C, dried at temperature of 90°C to 110°C, preferably100°C, for 12 h to 48 h, preferably 24 h, placed in a beaker and 35% concentrated hydrochloric acid is added in an amount of 5 ml to 20 ml for each 1 g of the sample, mixed in a magnetic stirrer for 10 min to 60 min, preferably 25 min, drained and washed with distilled water with a temperature of 70°C to 95°C, preferably 90°C, until pH=7 is achieved, then dried in an oven at 90°C to 110°C, preferably 100°C, for 12 h to 48 h, preferably 24 h. Preferably, the gagate is ground in an analytical mill for 15 min to 60 min, most preferably for 30 min, and then ground in a mortar for 10 min to 30 min, most preferably for 15 min. Preferably, washing is carried out one to ten times with distilled water in an amount of 1 dm³ to 3 dm³ for each 1 g of the sample.

The subject of the invention is also a method for obtaining a porous electrode material based on graphene flakes, which consists in adding KOH to the ground gagate at a ratio from 1:1 to 1:6, preferably 1:3, and mixing while triturating for 5 min to 15 min; after which the mixture is placed in a porcelain boat and carbonised in a tube furnace under an inert gas atmosphere of argon or nitrogen and heated at a heating rate of 5 to 30°C/min, preferably 5°C/ min or 10°C/min, or 20°C/min, to a temperature of 800°C; then this temperature and the inert gas flow are maintained for 1 h to 5 h, preferably 3 hours, followed by self-cooling under an oxygen-free atmosphere to a temperature below 40°C, the sample obtained in this way is then ground, placed in a beaker with distilled water at a ratio of 1:1 dm³ to 1:3 dm³, preferably 1:2 dm³, and mixed in a magnetic stirrer for 10 min to 60 min, preferably 30 min, then the sample is drained, washed at least once with distilled water with a temperature of 70°C to 95°C, preferably 90°C, dried at temperature of 90°C to 110°C, preferably 100°C, for 12 h to 48 h, preferably 24 h, placed in a beaker and 35% concentrated hydrochloric acid is added in an amount of 5 ml to 20 ml for each 1 g of the sample, mixed in a magnetic stirrer for 10 min to 60 min, preferably 25 min, drained and washed with distilled water with a temperature of 70°C to 95°C, preferably 90°C, until pH=7 is achieved, then dried in an oven at temperature of 90°C to 110°C, preferably 100°C, for 12 h to 48 h, preferably 24 h. Preferably, the gagate is ground in an analytical mill preferably for 15 min to 60 min, most preferably for 30 min, and then ground in a mortar for 10 min to 30 min, most preferably for 15 min. Preferably, washing is carried out one to ten times with distilled water in an amount of 1 dm³ to 3 dm³ for each 1 g of the sample.

The subject of the invention is also a method for obtaining a felt with a porous electrode material based on graphene flakes, which consists in adding ethanol at a ratio of 1:1 ml to 1:5 ml to a solution consisting of the carbon material obtained according to any of the two methods described above (claims 1 to 6) in an amount of 75% to 92%, graphene nanoplatelets (GNP)750 in an amount of 1% to 5%, PVP or PTFE in an amount of 5% to 10%, carbon black in an amount of 1% to 5% and ferrocene in an amount of 1% to 5%, subjecting to an ultrasonic bath at temperature of 15°C to 25°C for 10 min to 60 min, then the felt, preferably in the form of discs, is entirely immersed in the solution and subjected to an ultrasonic bath at temperature of 15°C to 25°C for 10 min to 60 min, preferably 30 min, then it is carbonised in a tube furnace under an inert gas atmosphere of argon or nitrogen, heating the sample at a heating rate of 5 to 30°C/min, preferably in steps of 5°C/min or 10°C/min, or 20°C/min, to a temperature of 800°C, and then this temperature and the inert gas flow are maintained for 1 h to 5 h, preferably for 1 h, followed by self-cooling under an oxygen-free atmosphere to a temperature below 40°C.

The subject of the invention is also a method for obtaining a porous electrode material based on graphene flakes, which consists in adding MSM and GNP to the ground gagate at a ratio of 1:0.1:0.1 to 1:1:0.2, preferably 1:0.5:0.1, and mixing while triturating for 10 min to 30 min, adding KOH in an amount of 1 g to 6 g per mixture and mixing for 10 min to 30 min, after which the mixture is placed in a porcelain boat and carbonised in a tube furnace under an inert gas atmosphere of argon or nitrogen and heated at a heating rate of 5 to 30°C/min, preferably 5°C/min or 10°C/min, or 20°C/min, to a temperature of 800°C, then this temperature and the inert gas flow are maintained for 1 h to 5 h, preferably for 3 hours, followed by self-cooling under an oxygen-free atmosphere to a temperature below 40°C, the sample obtained in this way is then ground, placed in a beaker with distilled water in an amount of 1 dm³ to 3 dm³, preferably 1 dm³, and mixed in a magnetic stirrer for 10 to 60 min, preferably 30 min, then the sample is drained, washed at least once with distilled water with a temperature of 15 to 20°C, dried at temperature of 90 to 110°C, preferably100°C, for 12 h to 48 h, preferably 24 h, placed in a beaker and 35% concentrated hydrochloric acid is added at a ratio of 5 to 20 ml for each 1 g of the sample, mixed in a magnetic stirrer for 10 to 60 min, preferably 25 min, drained and washed with distilled water with a temperature of 15 to 25°C until pH=7 is achieved, then dried in an oven at temperature of 90 to 110°C, preferably 100°C, for 12 h to 48 h, preferably 24 h. Preferably, the gagate is ground in an analytical mill preferably for 10 min to 60 min, most preferably for 30 min, and then ground in a mortar for 10 min to 30 min, most preferably for 15 min. Preferably, washing is carried out one to ten times with distilled water in an amount of 1 dm³ to 3dm³ for each 1 g of the sample.

The subject of the invention is also a method for obtaining a felt with a porous electrode material based on graphene flakes, which consists in adding ethanol at a ratio of 1:1 to 1:5 (solution to ethanol) to the solution consisting of carbon material obtained according to the method described above (claims 7 to 9) in an amount of 75% to 89%, carbon black in an amount of 5% to 10%, PVP or PTFE in an amount of 5% to 10% and ferrocene in an amount of 1% to 5%, and subjecting to an ultrasonic bath at temperature of 15°C to 25°C for 10 min to 60 min, then the felt, preferably in the form of discs, is entirely immersed in the solution and subjected to an ultrasonic bath at temperature of 15°C to 25°C for 10 min to 60 min, preferably 30 min, and then carbonised in a tube furnace under an inert gas atmosphere of argon or nitrogen, heating the sample at a heating rate of 5 to 30°C/min, preferably in steps of 5°C/min or 10°C/min, or 20°C/min, to a temperature of 800°C, then this temperature and the inert gas flow are maintained for 1 h to 5 h, preferably 1 hour, followed by self-cooling under an oxygen-free atmosphere to a temperature below 40°C.

Raw gagate is a source of final material with a large surface area, and also a material that increases ionic capacity. Polymer PVP (polyvinylpyrrolidone) is also used in the synthesis as a binder, which, as a polar substance, binds well to other polar compounds. To enhance the conductivity of the material, graphene flakes and carbon black (C-NERGY^{™} SUPER C65) are added. On the other hand, ferrocene is an organometallic compound and a source of iron. It is resistant to oxidation, many chemical reactants and temperature. It is an essential ingredient in synthesis thanks to its unique structure and key electrochemical properties (it can transfer electrical charges). Modification of the electrode material with ferrocene improves conductivity and charge storage efficiency. MSM (methylsulfonylmethane) is a source of sulphur, naturally occurring in organisms, which has the additional effect of improving the electrochemical properties and structural parameters of the material.

To remove its defects, the carbon felt is modified. This is a key component of electrodes, which has an impact on the performance, durability and electrochemical efficiency of energy storage systems. It allows the efficient redox reaction to occur in the electrolyte used. The material, based on gagate and graphene flakes, can be used alone or can be deposited on a porous carrier, e.g. carbon felt.

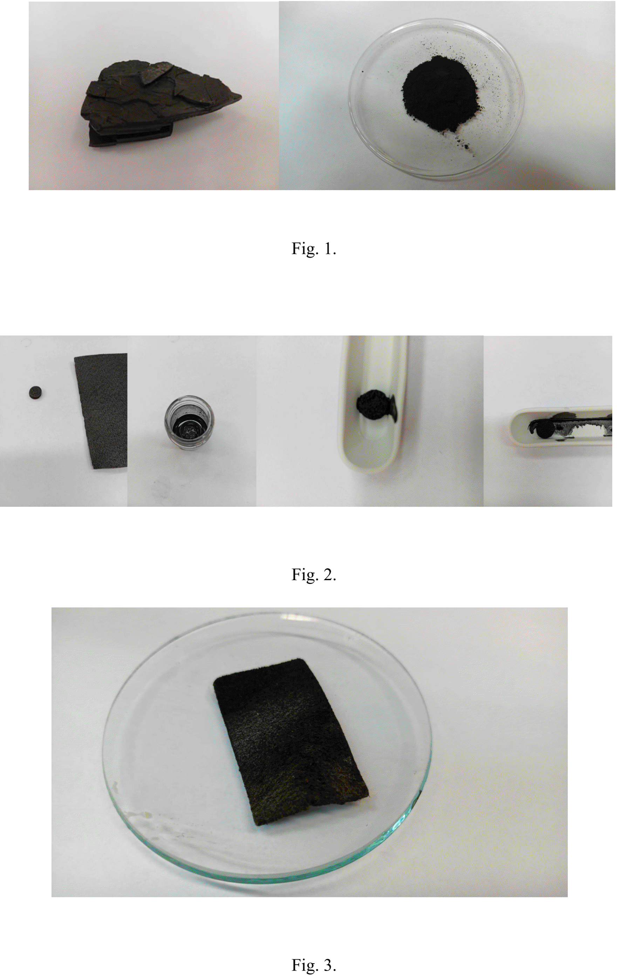

The materials that are subject of the invention are shown in the drawing, where Fig. 1 depicts the raw materials to form a composite: a) gagate and b) graphene flakes; Fig. 2 depicts an illustrative carbon felt with carbon material obtained by the presented methods during the synthesis process of the electrode material, Fig. 3 depicts an illustrative modified carbon felt with proposed electrode material based on the presented inventions, Fig. 4 depicts electrochemical processes (charging-discharging) during tests of the subject of the invention as an electrode material for energy storage systems - flow batteries, Fig. 5 depicts electrochemical processes (capacity after up to 75 cycles) during tests of the subject of the invention as an electrode material for energy storage systems - flow batteries, Fig. 6 depicts electrochemical processes (specific capacity) during tests of the subject of the invention as an electrode material for energy storage systems - flow batteries, and Tab. 1 depicts the structural characteristics of obtained materials.

According to Table 1, the parameters and characteristics of the materials obtained according to the claimed methods and examples are provided. The electrodes were immersed in 1M ZnSO₄ as an electrolyte. Prior to the measurement, the cell was used for 50 cycles to obtain an undisturbed measurement. The measurement consisted of 70 cycles of charging and discharging. The battery operated in the voltage range of 2.0-0.7 V, at currents from 10 to -10 mA.

The average efficiency of the constructed cell is 91.34%, with a standard deviation (σ) of 0.73%. The calculated capacitance value for the operating electrode is 30.56 mAh/g (7C). The σ value was 0.98 mAh/g.

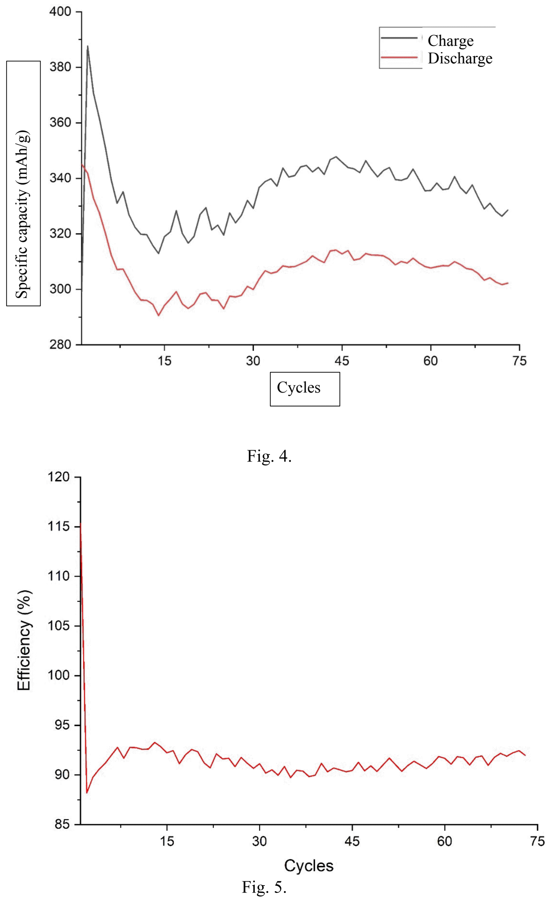

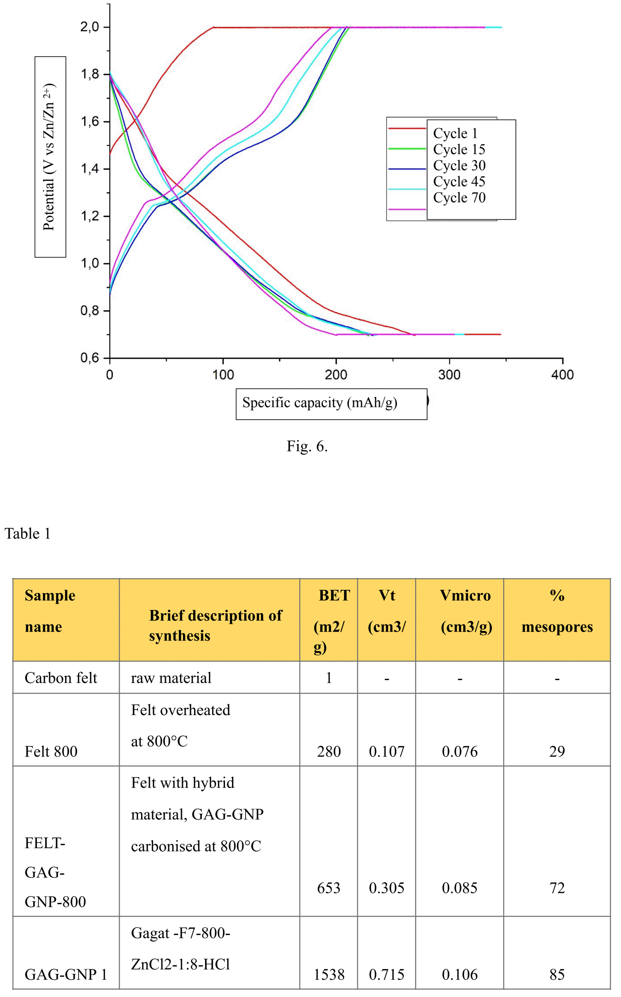

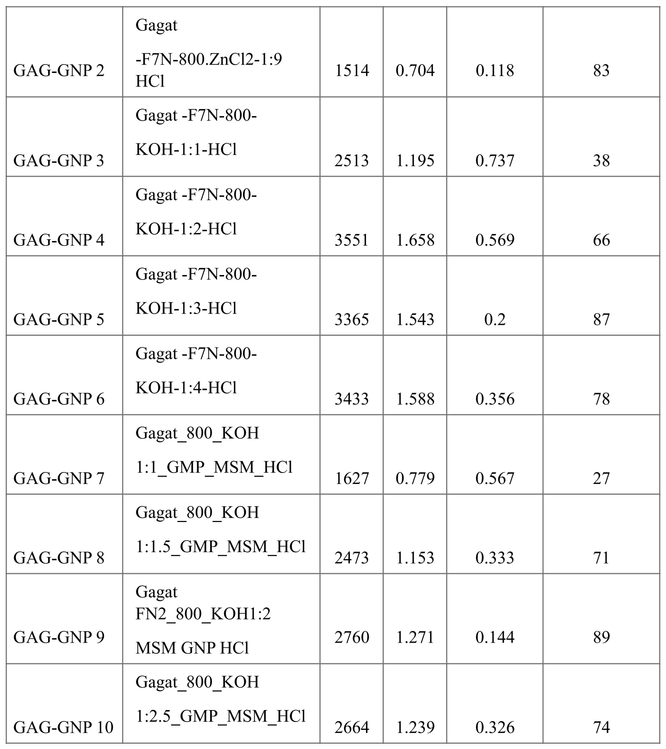

The materials in Table 1 are sufficiently stable, as there is no decrease in the capacity or efficiency after the following cycles, which proves the possible use of the resulting porous material as an electrode used in the construction of energy storage systems - flow batteries - as confirmed in Figures 4-6.

Embodiments of the invention according to the first method (claims 1-3) and the method of felt preparation (claim 10) with reference to the first method (claims 1-3).

### Example 1.I.

In an analytical mill, a 30 g aliquot of gagate was ground for 30 min. Then, 1 g of the sample obtained in this way was collected, placed in a mortar and ground for 15 min. ZnCl₂ in an amount of 8 g was added to the ground material and triturated together for 10 min. The sample was placed in a porcelain boat and carbonised in a tube furnace under an inert gas atmosphere of argon or, in another embodiment, of nitrogen. The sample was heated at a heating rate of 5°C/min, and in other embodiments in steps of 10°C/min or 20°C/min, to a temperature of 800°C, and then this temperature and the inert gas flow were maintained for 3 hours. After this process, the sample underwent self-cooling under an oxygen-free atmosphere to a temperature below 40°C. After a pyrolysis process, the sample was ground in a mortar for 10 min, transferred to a beaker with 1 dm³ of distilled water and mixed in a magnetic stirrer for 30 min. The sample was drained and washed with distilled water (3 dm³) at a temperature of 90°C. The sample was dried at 100°C for 24 h. The sample was then placed in a beaker, and 35% concentrated hydrochloric acid was added in an amount of 12 ml per 1 g of the sample and mixed in a magnetic stirrer for 25 min. After this time, the sample was drained and washed with distilled water at a temperature of 90°C (3 dm³) to pH=7, followed by drying in an oven at 100°C for 24 h.

The example resulted in a material with a surface area of 1538 m²/g, a pore volume of 0.715 cm³/g, a micropore volume of 0.106 cm³/g, with 85% of mesopores.

### Example 1.II.

Example 1.II differs from Example 1.I in that ZnCl₂ in an amount of 9 g was used.

The example resulted in a porous material with a surface area of 1514 m²/g, a pore volume of 0.704 cm³/g, a micropore volume of 0.118 cm³/g, with 83% of mesopores.

### Example 1.III.

Reagents in an amount of 105 mg were prepared, including 80 mg of carbon material obtained according to Example 1 or 2, 5 mg of graphene nanoplatelets (GNP)750, 5 mg of carbon black C65, 10 mg of PVP and 5 mg of ferrocene. Then, 3 to 5 ml of ethanol was added, 4 ml in the embodiment. The solution was placed in an ultrasonic bath for 30 min. After this time, 3 discs of SIGRACELL^{®} KFD felt with a diameter of 10 mm were added to the solution, which was again placed in the ultrasonic bath for 30 min. After this time, the discs were placed in a porcelain boat and carbonised in a tube furnace under an inert gas atmosphere of argon. The sample was heated at a heating rate of 5°C/min, and in other embodiments, in steps of 10°C/min or 20°C/min, to a temperature of 800°C, and then this temperature and the inert gas flow were maintained for 1 hour. After this process, the sample underwent self-cooling under an oxygen-free atmosphere to a temperature below 40°C.

The example resulted in an electrode for electrochemical measurements.

### Example 1. IV.

Reagents in an amount of 105 mg were prepared, including 80 mg of carbon material obtained according to Example 1 or 2, 5 mg of GNP 750, 5 mg of carbon black C65, 10 mg of PTFE and 5 mg of ferrocene. Then, 3 to 5 ml of ethanol was added, 4 ml in the embodiment. The mixture was triturated together in a mortar until a compact paste was obtained. This mass was kneaded with flat laboratory spatulas. After 10 minutes, the mass was rolled out on a flat surface and left to dry in an oven at 100°C for 24 h. An electrode for electrochemical measurements was cut from the material obtained in this way.

### Example 1.V.

The method for obtaining a porous electrode material based on graphene flakes consists in adding ZnCl₂ to ground gagate in the ratio of 1:8 and mixing while triturating for 10 min, after which the mixture is placed in a porcelain boat and carbonised in a tube furnace under an inert gas atmosphere of argon and heated at a heating rate of 20°C/min to a temperature of 800°C, then this temperature and the inert gas flow are maintained for 3 hours, followed by self-cooling under an oxygen-free atmosphere to a temperature below 40°C, i.e. 35°C, the sample obtained in this way is then ground, placed in a beaker with distilled water at a ratio of 1:2 dm³ and mixed in a magnetic stirrer for 30 min, the sample is then drained, washed three times with distilled water with a temperature of 90°C, dried at 100°C for 24 h, placed in a beaker and 35% concentrated hydrochloric acid is added in an amount of 10 ml for each 1 g of the sample, mixed in a magnetic stirrer for 25 min, drained and washed with distilled water with a temperature of 90°C until pH=7 is achieved, then dried in an oven at 100°C for 24 h.

### Example 1. VI.

The method for obtaining a porous electrode material based on graphene flakes consists in adding ZnCl₂ to ground gagate in a ratio of 1:6 and mixing while triturating for 5 min, after which the mixture is placed in a porcelain boat and carbonised in a tube furnace under an inert gas atmosphere of nitrogen and heated at a heating rate of 5°C/min to a temperature of 800°C, then this temperature and the inert gas flow are maintained for 1 h, followed by self-cooling under an oxygen-free atmosphere to a temperature below 40°C, i.e. 25°C, the sample obtained in this way is then ground, placed in a beaker with distilled water at a ratio of 1:1 dm³ and mixed in a magnetic stirrer for 10 min, then the sample is drained, washed once with distilled water with a temperature of 70°C, dried at 90°C for 12 h, placed in a beaker and 35% concentrated hydrochloric acid is added at a ratio of 5 ml for each 1 g of the sample, mixed in a magnetic stirrer for 10 min, drained and washed with distilled water with a temperature of 70°C until pH=7 is achieved, then dried in an oven at 90°C for 12 h.

### Example 1. VII.

The method for obtaining a porous electrode material based on graphene flakes consists in adding ZnCl₂ to the ground gagate in a ratio of 1:12 and mixing while triturating for 15 min, after which the mixture is placed in a porcelain boat and carbonised in a tube furnace under an inert gas atmosphere of argon and heated at a heating rate of 30°C/min to a temperature of 800°C, then this temperature and the inert gas flow are maintained for 5 h, followed by self-cooling under an oxygen-free atmosphere, to a temperature below 40°C, i.e. 39.5°C, the sample obtained in this way is then ground, placed in a beaker with distilled water at a ratio of 1:3 dm³ and mixed in a magnetic stirrer for 60 min, then the sample is drained, washed ten times with distilled water with a temperature of 95°C, dried at 110°C for 48 h, placed in a beaker and 35% concentrated hydrochloric acid is added in an amount of 20 ml for each 1 g of the sample, mixed in a magnetic stirrer for 60 min, drained and washed with distilled water with a temperature of 95°C until pH=7 is achieved, then dried in an oven at 110°C for 48 h.

### Example 1. VIII.

Example 1.VIII consists in carrying out the method for obtaining the material according to Example 1.V or 1.VI or 1.VII, wherein the gagate is ground in an analytical mill for 15 min and, in another embodiment, for 30 min or 30 min, followed by grinding in a mortar for 10 min and, in another embodiment, for 15 min or 30 min.

### Example 1. IX.

The method for obtaining a felt with a porous electrode material based on graphene flakes consists of adding ethanol at a ratio of 1:3 ml to a solution consisting of the carbon material obtained according to any of Examples 1.V, 1.VI, 1.VII or 1.VIII in an amount of 92%, graphene nanoplatelets (GNP)750 in an amount of 1%, PVP, and in another embodiment of PTFE, in an amount of 5%, carbon black in an amount of 1% and ferrocene in an amount of 1%, and subjecting to an ultrasonic bath at 20°C for 30 min, then the felt in the form of 10 mm discs is entirely immersed in the solution and subjected to an ultrasonic bath at 20°C for 30 min, then carbonised in a tube furnace under an inert gas atmosphere of argon, heating the sample at a heating rate of 10°C/min to a temperature of 800°C, then this temperature and the inert gas flow are maintained for 3 h, followed by self-cooling under an oxygen-free atmosphere to a temperature below 40°C, i.e. 35°C.

### Example 1. X.

The method for obtaining a felt with a porous electrode material based on graphene flakes consists of adding ethanol at a ratio of 1:1 ml to a solution consisting of the carbon material obtained according to any of Examples 1.V, 1.VI, 1.VII or 1.VIII in an amount of 75%, graphene nanoplatelets (GNP)750 in an amount of 5%, PVP, and in another embodiment PTFE, in an amount of 10%, carbon black in an amount of 5% and ferrocene in an amount of 5%, and subjecting to an ultrasonic bath at 15°C for 30 min, then the felt in the form of 10 mm discs is entirely immersed in the solution and subjected to an ultrasonic bath at 15°C for 10 min, then carbonised in a tube furnace under an inert gas atmosphere of nitrogen, heating the sample at a heating rate of 5°C/min to a temperature of 800°C, then this temperature and the inert gas flow are maintained for 1 h, followed by self-cooling under an oxygen-free atmosphere to a temperature below 40°C, i.e. 25°C.

### Example 1. XI.

The method for obtaining a felt with a porous electrode material based on graphene flakes consists of adding ethanol at a ratio of 1:5 ml to a solution consisting of the carbon material obtained according to any of Examples 1.V, 1.VI, 1.VII or 1.VIII in an amount of 85%, graphene nanoplatelets (GNP)750 in an amount of 3%, PVP, and in another embodiment PTFE, in an amount of 6%, carbon black in an amount of 3% and ferrocene in an amount of 3%, and subjecting to an ultrasonic bath at 25°C for 60 min, then the felt in the form of 10 mm discs is entirely immersed in the solution and subjected to an ultrasonic bath at 15°C for 10 min, then carbonised in a tube furnace under an inert gas atmosphere of nitrogen, heating the sample at a heating rate of 30°C/min to a temperature of 800°C, then this temperature and the inert gas flow are maintained for 5 h, followed by self-cooling under oxygen-free atmosphere to a temperature below 40°C, i.e. 39.5°C.

Embodiments of the invention according to the second method (claims 4-6) and the method for preparing a felt (claim 10) with reference to the second method (claims 4-6).

### Example 2. I.

A 30 g aliquot of gagate was prepared in an analytical mill and ground for 30 min. Then, 1 g of the sample obtained in this way was collected, placed in a mortar and ground for 15 min. KOH in an amount of 1 g was added to the ground material and triturated together for 10 min. The sample was placed in a porcelain boat and carbonised in a tube furnace under an inert gas atmosphere of argon and, in another embodiment, of nitrogen. The sample was heated at a heating rate of 5°C/min and, in other embodiments in steps of 10°C/min or 20°C/min, to a temperature of 800°C, and then this temperature and the inert gas flow were maintained for 3 hours. After this process, the sample underwent self-cooling under an oxygen-free atmosphere to a temperature below 40°C. After a pyrolysis process, the sample was ground in a mortar for 10 min, transferred to a beaker with 1 dm³ of distilled water and mixed in a magnetic stirrer for 30 min. The sample was drained and washed with distilled water (3 dm³) until a neutral pH (pH 7) was obtained. The sample was dried at 100°C for 24 h. The sample was then placed in a beaker and 12 ml of 35% concentrated hydrochloric acid was added per 1 g of the sample, and mixed in a magnetic stirrer for 25 min. After this time, the sample was drained and washed once with distilled water at room temperature to pH=7, followed by drying in an oven at 100°C for 21 h.

The example resulted in a porous material with a surface area of 2513 m²/g, a pore volume of 1.195 cm³/g, a micropore volume of 0.737 cm³/g and 38% of mesopores.

### Example 2. II.

Example 2.II differs from Example 2.I in that KOH in an amount of 2 g was used.

The example resulted in a porous material with a surface area of 3551 m²/g, a pore volume of 1.658 cm³/g, a micropore volume of 0.569 cm³/g and 66% of mesopores.

### Example 2. III.

Example 2.III differs from Example 2.I in that KOH in an amount of 3 g was used.

The example resulted in a porous material with a surface area of 3365 m²/g, a pore volume of 1.543 cm³/g, a micropore volume of 0.2 cm³/g and 87% of mesopores.

### Example 2. IV.

Example 2.IV differs from Example 2.I in that KOH in an amount of 4 g was used.

The example resulted in a porous material with a surface area of 3433 m²/g, a pore volume of 1.588 cm³/g, a micropore volume of 0.356 cm³/g and 78% of mesopores.

### Example 2. V.

Reagents in an amount of 105 mg were prepared, including 80 mg of carbon material obtained according to Example 2.I, 2.II, 2.III or 2.IV, 10 mg of carbon black C65, 10 mg of PTFE and 5 mg of ferrocene. Then, 3 to 5 ml of ethanol was added, 4 ml in the embodiment. The mixture was triturated together in a mortar until a compact paste was obtained. This mass was kneaded with flat laboratory spatulas. After 10 minutes, the mass was rolled out on a flat surface and left to dry in an oven at 100°C for 24 h.

An electrode for electrochemical measurements was cut from the material obtained in this way.

### Example 2. VI.

Reagents in an amount of 105 mg were prepared, including 80 mg of carbon material obtained according to Example 2.I, 2.II, 2.III, 2.IV or 2.V, 10 mg of carbon black C65, 10 mg of PVP and 5 mg of ferrocene. Then, 3 to 5 ml of ethanol was added, 4 ml in the embodiment. The solution was placed in an ultrasonic bath for 30 min. After this time, 3 discs of SIGRACELL^{®} KFD felt in a diameter of 10 mm were added - entirely immersed - to the solution and were again placed in the ultrasonic bath for 30 min. After this time, the discs were placed in a porcelain boat and carbonised in a tube furnace under an inert gas atmosphere of argon or, in another example, of nitrogen. The sample was heated at a heating rate of 5°C/min and, in other embodiments, in steps of 10°C/min or 20°C/min, to a temperature of 800°C, and then this temperature and the inert gas flow were maintained for 1 hour. After this process, the sample underwent self-cooling under an oxygen-free atmosphere to a temperature below 40°C.

The example resulted in an electrode for electrochemical measurements.

### Example 2.VII.

The method for obtaining a porous electrode material based on graphene flakes consists in adding KOH to the ground gagate at a ratio of 1:1 and mixing while triturating for 10 min, after which the mixture is placed in a porcelain boat and carbonised in a tube furnace under an inert gas atmosphere of argon and heated at a heating rate of 20°C/min to a temperature of 800°C, then this temperature and the inert gas flow are maintained for 3 hours, followed by self-cooling under an oxygen-free atmosphere to a temperature below 40°C, i.e. 35°C, the sample obtained in this way is then ground, placed in a beaker with distilled water at a ratio of 1:2 dm³ and mixed in a magnetic stirrer for 30 min, then the sample is drained, washed three times with distilled water with a temperature of 90°C, dried at 100°C for 24 h, placed in a beaker and 35% concentrated hydrochloric acid is added in an amount of 10 ml for each 1 g of the sample, mixed in a magnetic stirrer for 25 min, drained and washed with distilled water with a temperature of 90°C until pH=7 is achieved, then dried in an oven at 100°C for 24 h.

### Example 2.VIII.

The method for obtaining a porous electrode material based on graphene flakes consists in adding KOH to the ground gagate at a ratio of 1:6 and mixing while triturating for 5 min, after which the mixture is placed in a porcelain boat and carbonised in a tube furnace under an inert gas atmosphere of nitrogen and heated at a heating rate of 5°C/min to a temperature of 800°C, then this temperature and the inert gas flow are maintained for 1 h, followed by self-cooling under an oxygen-free atmosphere to a temperature below 40°C, i.e. 25°C, the sample obtained in this way is then ground, placed in a beaker with distilled water at a ratio of 1:1 dm³ and mixed in a magnetic stirrer for 10 min, then the sample is drained, washed once with distilled water with a temperature of 70°C, dried at 90°C for 12 h, placed in a beaker and 35% concentrated hydrochloric acid is added in an amount of 5 ml for each 1 g of the sample, mixed in a magnetic stirrer for 10 min, drained and washed with distilled water with a temperature of 70°C until pH=7 is achieved, then dried in an oven at 90°C for 12 h.

### Example 2. IX.

The method for obtaining a porous electrode material based on graphene flakes consists in adding KOH to the ground gagate at a ratio of 1:3 and mixing while triturating for 15 min, after which the mixture is placed in a porcelain boat and carbonised in a tube furnace under an inert gas atmosphere of argon and heated at a heating rate of 30°C/min to a temperature of 800°C, then this temperature and the inert gas flow are maintained for 5 h, followed by self-cooling under an oxygen-free atmosphere to a temperature below 40°C, i.e. 39.5°C, the sample obtained in this way is then ground, placed in a beaker with distilled water at a ratio of 1:3 dm³ and mixed in a magnetic stirrer for 60 min, then the sample is drained, washed ten times with distilled water with a temperature of 95°C, dried at 110°C for 48 h, placed in a beaker and 35% concentrated hydrochloric acid is added in an amount of 20 ml for each 1 g of the sample, mixed in a magnetic stirrer for 60 min, drained and washed with distilled water with a temperature of 95°C until pH=7 is achieved, then dried in an oven at 110°C for 48 h.

### Example 2. X.

Example 2.X. consists in carrying out the method for obtaining the material according to Examples 2.VII or 2.VIII or 2.IX, wherein the gagate is ground in an analytical mill for 15 min and, in another embodiment, for 30 min or 30 min, followed by grinding in a mortar for 10 min and, in another embodiment, for 15 min or 30 min.

### Example 2. XI.

The method for obtaining a felt with a porous electrode material based on graphene flakes consists in adding ethanol at a ratio of 1:3 ml to a solution consisting of the carbon material obtained according to any of Examples 2.VII, 2.VIII, 2.IX or 2.X in an amount of 92%, graphene nanoplatelets (GNP)750 in an amount of 1%, PVP, and in another embodiment PTFE, in an amount of 5%, carbon black in an amount of 1% and ferrocene in an amount of 1%, and subjecting to an ultrasonic bath at 20°C for 30 min, then the felt in the form of 10 mm discs is entirely immersed in the solution and subjected to an ultrasonic bath at 20°C for 30 min, then carbonised in a tube furnace under an inert gas atmosphere of argon, heating the sample at a heating rate of 10°C/min to a temperature of 800°C, then this temperature and the inert gas flow are maintained for 3 h, followed by self-cooling under oxygen-free atmosphere to a temperature below 40°C, i.e. 35°C.

### Example 2. XII.

The method for obtaining a felt with a porous electrode material based on graphene flakes consists in adding ethanol at a ratio of 1:1 ml to a solution consisting of the carbon material obtained according to any of Examples 2.VII, 2.VIII, 2.IX or 2.X in an amount of 75%, graphene nanoplatelets (GNP)750 in an amount of 5%, PVP, and in another embodiment PTFE, in an amount of 10%, carbon black in an amount of 5% and ferrocene in an amount of 5%, and subjecting to an ultrasonic bath at 15°C for 30 min, then the felt in the form of 10 mm discs is entirely immersed in the solution and subjected to an ultrasonic bath at 15°C for 10 min, then carbonised in a tube furnace under an inert gas atmosphere of nitrogen, heating the sample at a heating rate of 5°C/min to a temperature of 800°C, then this temperature and the inert gas flow are maintained for 1 h, followed by self-cooling under an oxygen-free atmosphere to a temperature below 40°C, i.e. 25°C.

### Example 2. XIII.

The method for obtaining a felt with a porous electrode material based on graphene flakes consists of adding ethanol at a ratio of 1:5 ml to a solution consisting of the carbon material obtained according to any of Examples 2.VII, 2.VIII, 2.IX or 2.X in an amount of 85%, graphene nanoplatelets (GNP)750 in an amount of 3%, PVP, and in another embodiment PTFE, in an amount of 6%, carbon black in an amount of 3% and ferrocene in an amount of 3%, and subjecting to an ultrasonic bath at 25°C for 60 min, then the felt in the form of 10 mm discs is entirely immersed in the solution and subjected to an ultrasonic bath at 15°C for 10 min, then carbonised in a tube furnace under an inert gas atmosphere of nitrogen, heating the sample at a heating rate of 30°C/min to a temperature of 800°C, then this temperature and the inert gas flow are maintained for 5 h, followed by self-cooling under an oxygen-free atmosphere to a temperature below 40°C, i.e. 39.5°C.

Embodiments of the invention according to the third method (claims 7-9) and the method for preparing the felt (claim 11).

### Example 3.I.

An aliquot of gagate (30 g) was ground for 30 min in an analytical mill. Then, 2 g of the sample obtained in this way was collected, placed in a mortar and ground for 15 min. MSM in an amount of 0.5 g and GNP 750 in an amount of 0.01 g were added to the ground material and triturated together for 20 min. Then, 2 g of KOH was added and triturated together for 10 min. The sample was placed in a porcelain boat and carbonised in a tube furnace under an inert gas atmosphere of argon or, in another embodiment, of nitrogen. The sample was heated at a heating rate of 5°C/min and, in other embodiments, in steps of 10°C/min or 20°C/min, to a temperature of 800°C, then this temperature and the inert gas flow were maintained for 3 hours. After this process, the sample underwent self-cooling under an oxygen-free atmosphere to a temperature below 40°C. After a pyrolysis process, the sample was ground in a mortar for 10 min, transferred to a beaker with 1 dm³ of distilled water and mixed in a magnetic stirrer for 30 min. The sample was drained and washed with 3 dm³ of distilled water until a neutral pH (pH 7) was achieved. The sample was dried at 100°C for 24 h. The sample was then placed in a beaker and 12 ml of 35% concentrated hydrochloric acid was added per 1 g of the sample, and mixed in a magnetic stirrer for 25 min. After this time, the sample was drained and washed with distilled water at 20°C until pH=7, followed by drying in an oven at 100°C for 24 h.

The example resulted in a porous material with a surface area of 1627 m²/g, a pore volume of 0.779 cm³/g, a micropore volume of 0.567 cm³/g and 27% of mesopores

### Example 3.II.

Example 3.II differs from Example 3.I in that KOH in an amount of 3 g was used. The example resulted in a porous material with a surface area of 2473 m²/g, a pore volume of 1.153 cm³/g, a micropore volume of 0.333 cm³/g and 71% of mesopores

### Example 3.III.

Example 3.III differs from Example 3.I in that KOH in an amount of 4 g was used.

The example resulted in a porous material with a surface area of 2760 m²/g, a pore volume of 1.271 cm³/g, a micropore volume of 0.144 cm³/g and 89% of mesopores

### Example 3.IV.

Example 3.IV differs from Example 3.I in that KOH in an amount of 5 g was used.

The example resulted in a porous material with an area of 2664 m²/g, a pore volume of 1.239 cm³/g, a micropore volume of 0.326 cm³/g and 74% of mesopores.

### Example 3.V.

Reagents in an amount of 105 mg were prepared, including 80 mg of carbon material obtained according to Example 3.I, 3.II, 3.III, 3.IV, 10 mg of carbon black C65, 10 mg of PVP and 5 mg of ferrocene. Then, 3 to 5 ml of ethanol was added, 4 ml in the embodiment. The solution was placed in an ultrasonic bath for 30 min. After this time, 3 discs of SIGRACELL^{®} KFD felt with a diameter of 10 mm were added - entirely immersed - to the solution and again placed in the ultrasonic bath for 30 min. After this time, the discs were placed in a porcelain boat and carbonised in a tube furnace under an inert gas atmosphere of argon or, in another example, of nitrogen. The sample was heated at a heating rate of 5°C/min and, in other embodiments, in steps of 10°C/min or 20°C/min, to a temperature of 800°C, and this temperature and the inert gas flow were then maintained for 1 hour. After this process, the sample underwent self-cooling under an oxygen-free atmosphere to a temperature below 40°C.

The example resulted in an electrode for electrochemical measurements.

### Example 3.VI.

The method for obtaining a porous electrode material based on graphene flakes consists in adding MSM and GNP to the ground gagate at a ratio of 1:0.5:0.1 and mixing while triturating for 20 min, adding KOH in an amount of 3 g to the mixture and mixing for 20 min, after which the mixture is placed in a porcelain boat and carbonised in a tube furnace under an inert gas atmosphere of argon or, in another embodiment, of nitrogen and heated at a heating rate of 20°C/min to a temperature of 800°C, then this temperature and the inert gas flow are maintained for 3 hours, followed by self-cooling under an oxygen-free atmosphere to a temperature below 40°C, i.e. 35°C, the sample obtained in this way is then ground, placed in a beaker with distilled water at a ratio of 2 dm³ and mixed in a magnetic stirrer for 30 min, then the sample is drained, washed three times with distilled water with a temperature of 20°C, dried at 100°C for 24 h, placed in a beaker and 35% concentrated hydrochloric acid is added at a ratio of 10 ml for each 1 g of the sample, mixed in a magnetic stirrer for 25 min, drained and washed with distilled water with a temperature of 20°C until pH=7 is achieved, then dried in an oven at 100°C for 24 h.

### Example 3.VII.

The method for obtaining a porous electrode material based on graphene flakes consists in adding MSM and GNP to the ground gagate at a ratio of 1:0.1:0.1 and mixing while triturating for 10 min, adding KOH in the amount of 1 g per mixture and mixing for 10 min, after which the mixture is placed in a porcelain boat and carbonised in a tube furnace under an inert gas atmosphere of argon and heated at a heating rate of 5°C/min to a temperature of 800°C, then this temperature and the inert gas flow are maintained for 1 h, followed by self-cooling under an oxygen-free atmosphere to a temperature below 40°C, i.e. 25°C, the sample obtained in this way is then ground, placed in a beaker with distilled water at a ratio of 1 dm³ and mixed in a magnetic stirrer for 10 min, then the sample is drained, washed once with distilled water with a temperature of 15°C, dried at 90°C for 12 h, placed in a beaker and 35% concentrated hydrochloric acid is added at a ratio of 5 ml for each 1 g of the sample, mixed in a magnetic stirrer for 10 min, drained and washed with distilled water with a temperature of 15°C until pH=7 is achieved, then dried in an oven at 90°C for 12 h. Gagate is ground in an analytical mill for 10 min, and in other embodiments, for 30 min or 60 min, then ground in a mortar for 10 min, and in other embodiments, for 15 min or 30 min.

### Example 3.VIII.

The method for obtaining a porous electrode material based on graphene flakes consists in adding MSM and GNP to the ground gagate at a ratio of 1:1:0.2 and mixing while triturating for 30 min, adding KOH at a ratio of 6 g to the mixture and mixing for 30 min, after which the mixture is placed in a porcelain boat and carbonised in a tube furnace under an inert gas atmosphere of argon and heated at a heating rate of 30°C/min to a temperature of 800°C, then this temperature and the inert gas flow are maintained for 5 h, followed by self-cooling under an oxygen-free atmosphere to a temperature below 40°C, i.e. 39.5°C, the sample obtained in this way is then ground, placed in a beaker with distilled water at a ratio of 3 dm³ and mixed in a magnetic stirrer for 60 min, then the sample is drained, washed ten times with distilled water with a temperature of 25°C, dried at 110°C for 48 h, placed in a beaker and 35% concentrated hydrochloric acid is added at a ratio of 20 ml for each 1 g of the sample, mixed in a magnetic stirrer for 60 min, drained and washed with distilled water with a temperature of 25°C until pH=7 is achieved, then dried in an oven at 110°C for 48 h.

### Example 3. IX.

The method for obtaining a felt with a porous electrode material based on graphene flakes consists in adding ethanol at a ratio of 1:4 (solution:ethanol) to a solution consisting of the carbon material obtained according to any of Examples 3.VI, 3.VII or 3.VIII in an amount of 83%, carbon black in an amount of 7%, PVP, or in another example PTFE, in an amount of 7% and ferrocene in an amount of 3%, and subjecting to an ultrasonic bath at 20°C for 20 min, then the felt in the form of 10 mm discs is entirely immersed in the solution and subjected to an ultrasonic bath at 20°C for 30 min, then carbonised in a tube furnace under an inert gas atmosphere of argon or, in another example, of nitrogen, heating at a heating rate of 20°C/min to a temperature of 800°C, then this temperature and the inert gas flow are maintained for 1 h, followed by self-cooling under an oxygen-free atmosphere to a temperature below 40°C, i.e. 35°C.

### Example 3. X.

The method for obtaining a felt with a porous electrode material based on graphene flakes consists in adding ethanol at a ratio of 1:1 (solution:ethanol) to a solution consisting of the carbon material obtained according to any of Examples 3.VI, 3.VII or 3.VIII in an amount of 75%, carbon black in an amount of 10%, PVP, or in another embodiment PTFE, in an amount of 10% and ferrocene in an amount of 5%, and subjecting to an ultrasonic bath at 15°C for 10 min, then the felt in the form of squares is entirely immersed in the solution and subjected to an ultrasonic bath at 15°C for 10 min, then carbonised in a tube furnace under an inert gas atmosphere of argon or, in another embodiment, of nitrogen, heating the sample at a heating rate of 5°C/min to a temperature of 800°C, then this temperature and the inert gas flow are maintained for 1 hour, followed by self-cooling under an oxygen-free atmosphere to a temperature below 40°C, i.e. 25°C.

### Example 3. XI.

The method for obtaining a felt with a porous electrode material based on graphene flakes consists of adding ethanol at a ratio of 1:5 (solution:ethanol) to a solution consisting of the carbon material obtained according to any of Examples 3.VI, 3.VII or 3.VIII in an amount of 89%, carbon black in an amount of 5%, PVP, or in another embodiment PTFE, in an amount of 5% and ferrocene in an amount of 1%, and subjecting to an ultrasonic bath at 25°C for 60 min, then the felt is entirely immersed in the solution and subjected to an ultrasonic bath at 25°C for 60 min, then carbonised in a tube furnace under an inert gas atmosphere of argon or, in another embodiment, of nitrogen, heating the sample at a heating rate of 30°C/min to a temperature of 800°C, then this temperature and the inert gas flow are maintained for 5 h, followed by self-cooling under an oxygen-free atmosphere to a temperature below 40°C, i.e. 39.5°C.

## Claims

1. A method for obtaining a porous electrode material based on graphene flakes **characterised in that** ZnCl₂ is added to the ground gagate at a ratio from 1:6 to 1:12, preferably 1:8, and mixed while triturating for 5 min to 15 min, after which the mixture is placed in a porcelain boat and carbonised in a tube furnace under an inert gas atmosphere of argon or nitrogen and heated at a heating rate of 5 to 30°C/min, preferably 5°C/min or 10°C/min, or 20°C/ min, to a temperature of 800°C, and this temperature and the inert gas flow are maintained for 1 h to 5 h, preferably 3 hours, followed by self-cooling under an oxygen-free atmosphere to a temperature below 40°C, the sample obtained in this way is then ground, placed in a beaker with distilled water at a ratio from 1:1 dm³ to 1:3 dm³, preferably 1:2 dm³, and mixed in a magnetic stirrer for 10 min to 60 min, preferably 30 min, the sample is then drained, washed at least once with distilled water with a temperature of 70°C to 95°C, preferably 90°C, dried at temperature of 90°C to 110°C, preferably 100°C for 12 h to 48 h, preferably 24 h, placed in a beaker and 35% concentrated hydrochloric acid is added at a ratio of 5 ml to 20 ml for each 1 g of the sample, mixed in a magnetic stirrer for 10 min to 60 min, preferably for 25 min, drained, washed with distilled water with a temperature of 70°C to 95°C, preferably 90°C, until pH=7 is achieved, and then dried in an oven at 90°C to 110°C, preferably 100°C, for 12 h to 48 h, preferably 24 h.

2. The method for obtaining a porous electrode material according to claim 1, **characterised in that** the gagate is ground in an analytical mill, preferably for 15 min to 60 min, most preferably for 30 min, and then ground in a mortar for 10 min to 30 min, most preferably for 15 min.

3. The method for obtaining a porous electrode material according to claim 1 or 2, **characterised in that** the washing is carried out one to ten times with distilled water in an amount of 1 dm³ to 3 dm³ for each 1 g of the sample.

4. A method for obtaining a porous electrode material based on graphene flakes **characterised in that** KOH is added to the ground gagate at a ratio from 1:1 to 1:6, preferably 1:3, and mixed while triturating for 5 min to 15 min, after which the mixture is placed in a porcelain boat and carbonised in a tube furnace under an inert gas atmosphere of argon or nitrogen and heated at a heating rate of 5 to 30°C/min, preferably 5°C/min or 10°C/min, or 20°C/ min, to a temperature of 800°C, then this temperature and the inert gas flow are maintained for 1 h to 5 h, preferably 3 hours, followed by self-cooling under an oxygen-free atmosphere to a temperature below 40°C, the sample obtained in this way in then ground, placed in a beaker with distilled water at a ratio of 1:1 dm³ to 1:3 dm³, preferably 1:2 dm³, and mixed in a magnetic stirrer for 10 min to 60 min, preferably 30 min, then the sample is drained, washed at least once with distilled water with a temperature of 70°C to 95°C, preferably 90°C, dried at temperature of 90°C to 110°C, preferably 100°C, for 12 h to 48 h, preferably 24 h, placed in a beaker and 35% concentrated hydrochloric acid is added, in an amount of 5 ml to 20 ml, for each 1 g of the sample, mixed in a magnetic stirrer for 10 min to 60 min, preferably for 25 min, drained and washed with distilled water with a temperature of 70°C to 95°C, preferably 90°C, until pH=7 is achieved, and then dried in an oven at temperature of 90°C to 110°C, preferably 100°C for 12 h to 48 h, preferably 24 h.

5. The method for obtaining a porous electrode material according to claim 4, **characterised in that** the gagate is ground in an analytical mill, preferably for 15 min to 60 min, most preferably for 30 min, and then ground in a mortar for 10 min to 30 min, most preferably for 15 min.

6. The method for obtaining a porous electrode material according to claim 4 or 5, **characterised in that** the washing is carried out one to ten times with distilled water in an amount of 1 dm³ to 3 dm³ for each 1 g of the sample.

7. A method for obtaining a porous electrode material based on graphene flakes **characterised in that** MSM and GNP are added to the ground gagate at a ratio of 1:0.1:0.1 to 1:1:0.2, preferably 1:0.5:0.1, and mixed while triturating for 10 min to 30 min, KOH is added in an amount of 1 g to 6 g per mixture and mixed for 10 min to 30 min, after which the mixture is placed in a porcelain boat and carbonised in a tube furnace under an inert gas atmosphere of argon or nitrogen, and heated at a heating rate of 5 to 30°C/min, preferably 5°C/min or 10°C/min, or 20°C/min, to a temperature of 800°C, and then this temperature and the inert gas flow are maintained for 1 h to 5 h, preferably 3 hours, followed by self-cooling under an oxygen-free atmosphere to a temperature below 40°C, then the sample obtained in this way is ground, placed in a beaker with distilled water in an amount of 1 dm³ to 3 dm³, preferably 1 dm³ and mixed in a magnetic stirrer for 10 to 60 min, preferably 30 min, then the sample is drained, washed at least once with distilled water with a temperature of 15 to 20 °C, dried at temperature of 90 to 110°C, preferably 100°C, for 12 h to 48 h, preferably 24 h, placed in a beaker and 35% concentrated hydrochloric acid is added in an amount of 5 to 20 ml for each 1 g of the sample, mixed in a magnetic stirrer for 10 to 60 min, preferably 25 min, drained and washed with distilled water with a temperature of 15 to 25°, until pH=7 is achieved, then dried in an oven at temperature of 90 to 110°C, preferably 100°C for 12 h to 48 h, preferably 24 h.

8. The method for obtaining a porous electrode material according to claim 7, **characterised in that** the gagate is ground in an analytical mill, preferably for 10 min to 60 min, most preferably for 30 min, and then ground in a mortar for 10 min to 30 min, most preferably for 15 min.

9. The method for obtaining a porous electrode material according to claim 7 or 8, **characterised in that** the washing is carried out one to ten times with distilled water in an amount of 1 dm³ to 3 dm³ for each 1 g of the sample.

10. A method for obtaining a felt with a porous electrode material based on graphene flakes
**characterised in that** ethanol is added at a ratio of 1:1 ml to 1:5 ml to a solution consisting of a carbonic material obtained according to any of the claims 1 to 6, in an amount of 75% to 92%, graphene nanoplatelets (GNP)750, in an amount of 1% to 5%, PVP or PTFE in an amount of 5% to 10%, carbon black in an amount of 1% to 5% and ferrocene in an amount of 1% to 5%, and subjected to an ultrasonic bath at temperature of 15°C to 25°C for 10 min to 60 min, after which the felt, preferably in the form of discs, is entirely immersed in the solution and subjected to an ultrasonic bath at temperature of 15°C to 25°C for 10 min to 60 min, preferably 30 min, then carbonised in a tube furnace under an inert gas atmosphere of argon or nitrogen, heating the sample at a heating rate of 5 to 30°C/min, preferably in steps of 5°C/min or 10°C/min, or 20°C/min, to a temperature of 800°C, then this temperature and the inert gas flow are maintained for 1 h to 5 h, preferably for 1 hour, followed by self-cooling under an oxygen-free atmosphere to a temperature below 40°C.

11. A method for obtaining a felt with a porous electrode material based on graphene flakes **characterised in that** ethanol at a ratio of 1:1 to 1:5 (solution to ethanol) is added to a solution consisting of a carbonic material obtained according to any of the claims 7, 8 or 9 in an amount of 75% to 89%, carbon black in an amount of 5% to 10%, PVP or PTFE in an amount of 5% to 10% and ferrocene in an amount of 1% to 5%, and subjected to an ultrasonic bath at temperature of 15°C to 25°C for 10 min to 60 min, after which the felt, preferably in the form of discs, is entirely immersed in the solution and subjected to an ultrasonic bath at temperature of 15°C to 25°C for 10 min to 60 min, preferably 30 min, and then carbonised in a tube furnace under inert gas atmosphere of argon or nitrogen, heating the sample at a heating rate of 5 to 30°C/min, preferably in steps of 5°C/min or 10°C/min or 20°C/min, to a temperature of 800°C, and then this temperature and the inert gas flow are maintained for 1 h to 5 h, preferably for 1 hour, followed by self-cooling under an oxygen-free atmosphere to a temperature below 40°C.
